# EUROPÄISCHE PATENTSCHRIFT

(11) **EP 3 979 469 B1**
(45) Veröffentlichungstag und Bekanntmachung des Hinweises auf die Patenterteilung: **01.04.2026**
(21) Anmeldenummer: 20199131.2
(22) Anmeldetag: 30.09.2020
(51) Int. Cl.: H02K 3/487, H02K 5/20, H02K 9/20

(54) **NUTVERSCHLUSS FÜR EINE ELEKTRISCHE MASCHINE**
SLOT CLOSURE FOR AN ELECTRIC MACHINE
FERMETURE D'ENCOCHE POUR UNE MACHINE ÉLECTRIQUE

(43) Veröffentlichungstag der Anmeldung: 06.04.2022
(73) Patentinhaber: Innomotics GmbH, 90441 Nürnberg (DE)
(72) Erfinder: Schneck, Jakob, 10245 Berlin (DE)
(74) Vertreter: Michalski Hüttermann & Partner Patentanwälte mbB

(56) Entgegenhaltungen:
- WO-A1-03/023940
- CN-B- 109 787 387
- DE-A1- 102010 042 175
- GB-A- 817 512
- US-A- 2 945 139
- US-A- 4 409 502
- US-A1- 2009 127 967

## Beschreibung

Die Erfindung betrifft einen Nutverschluss einer elektrischen Maschine, sowie auch eine elektrische Maschine.

Die Erfindung betrifft weiterhin ein Verfahren zur Kühlung einer elektrischen Maschine und/oder ein Verfahren zur Simulation eines Betriebs der elektrischen Maschine. Des Weiteren betrifft die Erfindung ein Computerprogramm zur Durchführung eines der Verfahren, insbesondere bei Ablauf in einer Steuereinheit.

Eine elektrische Maschine ist beispielsweise ein Motor oder ein Generator. Elektrische Maschinen können Synchronmaschinen oder Asynchronmaschinen sein. Die elektrische Maschine weist elektrische Leiter in einem Aktivteil aus. Das Aktivteil ist beispielsweise ein Stator und/oder ein Läufer der elektrischen Maschine. Die elektrischen Leiter können in Nuten positioniert sein, wobei die Nuten mittels eines Nutverschlusses verschließbar sind.

Beim Betrieb der elektrischen Maschine entstehen Verluste. Verluste werden in derartigen elektrischen rotierenden Maschinen, beispielsweise Motoren und Generatoren, insbesondere in stromdurchflossenen Wicklungen, Dynamoblechkörpern und massiven Eisenteilen, in Wärme umgesetzt. Die Maschinenbauteile werden erwärmt. Um der Erwärmung entgegenzuwirken kann eine Kühlung durchgeführt werden. Zweck einer Maschinenkühlung ist insbesondere das Abführen der auftretenden Verlustwärmeströme an die Umgebung, um Bauteiltemperaturgrenzen nicht zu überschreiten. Darüber hinaus beeinflussen die Kühlung bzw. die sich einstellenden Betriebstemperaturen den Maschinenwirkungsgrad, die Maschinenausnutzung, die Fertigungskosten und/oder gegebenenfalls, insbesondere bei permanenterregten Maschinen, die Materialkosten. Es gibt offene und geschlossene Kühlkreisläufe. Das Kühlfluid kann beispielsweise gasförmig (z.B. Luft) oder flüssig (z.B. Wasser) sein. Ferner werden insbesondere durch die Wahl des Kühlverfahrens bei geschlossenem Kühlkreislauf die Größe des Rückkühlwerks, die volumetrische und gravimetrische Leistungsdichte und die Kosten der gesamten Maschine, insbesondere des Rückkühlwerks, skaliert. Die fortschreitende Drehmomenten- bzw. Leistungsdichte-steigerung von elektrischen Maschinen, insbesondere von elektrischen Großmaschinen mit Nennleistungen im Megawattbereich (z.B. 1 bis 90 MW), wird vorrangig durch kühltechnische Maßnahmen begrenzt, da die Volumina der Verlustquellen kubisch, deren wärmeabführende Flächen jedoch nur quadratisch ansteigen.

Aus der US2009127967A1 ist ein Verfahren zum Zusammenbau einer elektrischen Maschine bekannt. Das Verfahren umfasst das Bereitstellen eines Rotors mit einem darin ausgebildeten Hohlraum. Mindestens eine konturierte Vertiefung ist in einem Abschnitt des Hohlraums ausgebildet. Ein Keil wird in den Hohlraum eingeführt. Der Keil umfasst mindestens einen konturierten Vorsprung, der so konfiguriert ist, dass er die mindestens eine konturierte Vertiefung des Hohlraums widerspiegelt. Weiterhin sind Kühlkanäle mit mindestens einen radialen Kühlkanal und mindestens einen axialen Kühlkanal bekannt. Insbesondere erstreckt sich beispielhaft jeder radiale Kühlkanal von einer radial inneren Oberfläche des Keils zu einer radial äußeren Oberfläche des Keils.

Aus der US 2945139 A ist ein Keil zum Festhalten von Leitern dynamoelektrischen Maschinen in Laminierungsschlitzen bekannt. Der Keil weist ein zentrales Längselement aus extrudiertem Metall mit einer hohen Wärmeleitfähigkeit und wärmeabstrahlenden Rippen auf, die einstückig mit dem Element ausgebildet sind.

Eine Aufgabe der Erfindung ist es die Kühlung einer elektrischen Maschine zu verbessern.

Eine Lösung der Aufgabe gelingt bei einem Nutverschluss nach Anspruch 1, bei einem Verfahren nach Anspruch 7 bzw. bei einem Computerprogrammprodukt nach Anspruch 12.

Ein Nutverschluss dient zum Verschließen einer Nut eines Aktivteils einer elektrischen Maschine. Der Nutverschluss weist einen Kanal zur Führung eines Fluids auf. Damit weist eine elektrische Maschine Nuten auf, wobei die Nuten jeweils einen Luftverschluss aufweisen, wobei der Nutverschluss einen Kanal zur Führung eines Fluids aufweist. Das Fluids ist beispielsweise gasförmig (zum Beispiel Luft) oder flüssig (zum Beispiel Wasser). So sind verschiedene Konzepte für die elektrische Maschine unter Einbeziehung einer Verdampfung oder ohne Verdampfung realisierbar. Es ist beispielsweise möglich als Fluid Gase wie Helium oder Wasserstoff zu verwenden. Dies kann insbesondere bei Drücken über dem Umgebungsdruck geschehen. So können insbesondere im Vergleich mit Luft günstigere Wärmekapazitäten und Wärmeübergangskoeffizienten bei gleichzeitig geringeren Ventilationsverlusten genutzt werden. Darüber hinaus, können als Fluid neben Wasser auch Öle verwendet werden.

Das Fluid ist in einem offenen Kühlkreislauf und/oder in einem geschlossenen Kühlkreislauf geführt. Durch die Erfindung können insbesondere Kühlkonzepte verbessert werden. So können in einer Ausgestaltung eines Kühlkonzeptes Bauteile in direktem Kontakt mit Luft in einem geschlossenen Kreislauf gekühlt sein und die dabei von der Luft aufgenommene Wärme in der Folge in einem Luft-Wasser- oder Luft-Luft-Wärmeübertrager an die Umgebung abgegeben, ohne die Systemkomplexität signifikant zu erhöhen.

In einer Ausgestaltung des Nutverschlusses weist dieser eine Vielzahl von Kanälen auf. Dadurch kann beispielsweise eine Rückleitung des Fluids durchgeführt werden. Dies kann auch zum Ausgleich der Temperaturverteilung über die Nut durch das Fluid dienen.

In einer Ausgestaltung des Nutverschlusses weist der Nutverschluss eine Öffnung auf, wobei die Öffnung den Kanal zum Luftspalt der elektrischen Maschine (hin) öffnet. Dadurch kann Fluids zu einer verstärkten Kühlung austreten. Entspannt sich das Fluids (Gas) beim Austritt, so kann eine zusätzliche Kühlung erreicht werden.

In einer Ausgestaltung des Nutverschlusses weist die Öffnung eine Düse auf bzw. ist die Öffnung als eine Düse ausgestaltet. Durch die Düse, bzw. durch Düsen ist eine Richtung der austretenden Luft vorgebbar. Auch zum Entspannen eines Gases ist die Verwendung eine Düse geeignet.

In einer Ausgestaltung des Nutverschlusses weist in dieser eine Oberfläche auf welche dreidimensional ausgeführt ist, um eine Oberflächenvergrößerung der Oberfläche zu erreichen, welche im Einbauzustand des Nutverschlusses in die elektrische Maschine zum Luftspalt hin gerichtet ist. Dies verbessert die Wärmeabfuhr.

Eine elektrische Maschine weist eine Nut in einem Aktivteil der elektrischen Maschine auf. Insbesondere weist eine elektrische Maschine eine Vielzahl von Nuten auf, wobei in dem Nuten des Aktivteils der elektrischen Maschine elektrische Wicklungen gelegt sind. Die Nut bzw. die Nuten sind mit einem Nutverschluss verschlossen. Die Ausgestaltung des Nutverschlusses ist hier in verschiedenen Variationen beschrieben. Der Nutverschluss bzw. die Nutverschlüsse weisen einen oder mehrere Kanäle auf. Die elektrische Maschine kann beispielsweise nur Nutverschlüsse mit Kanälen aufweisen oder auch eine Mischung aus Nutverschlüssen mit und ohne einen Kanal. Dies hängt beispielsweise von der erforderlichen Kühlleistung ab.

In einer Ausgestaltung der elektrischen Maschine weist ein Nutverschluss einen Kanal oder eine Vielzahl von Kanälen auf. Weiterhin weist in einer Ausgestaltung der elektrischen Maschine diese nur Nutverschlüsse mit jeweils einem Kanal auf. In einer weiteren Ausgestaltung der elektrischen Maschine weist diese Nutverschlüsse mit jeweils zumindest zwei Kanälen auf. In einer weiteren Ausgestaltung der elektrischen Maschine weist diese Nutverschlüsse mit einer unterschiedlichen Anzahl von Kanälen auf. Derart kann auf unterschiedliche Kühlungserfordernisse der elektrischen Maschine flexibel eingegangen werden.

Der Nutverschluss kann eine Keilform aufweisen. Deswegen kann der Nutverschluss auch als Nutverschlusskeil bezeichnet werden. Der Nutverschluss verschließt in Nuten eines Aktivteils der elektrischen Maschine. Das Aktivteil der elektrischen Maschine ist ein Stator und/oder ein Läufer der elektrischen Maschine.

In einer Ausgestaltung der elektrischen Maschine ist der Kanal im Nutverschluss und/oder der Nutverschluss in der gleichen radialen Position, wie ein Streusteg. Dadurch ergibt sich z.B. eine kompakte Bauweise.

In einer Ausgestaltung der elektrischen Maschine weist der der Nutverschluss eine erste Oberfläche auf, welche der Nut, bzw. dem Nutgrund, zugewandt ist und eine zweite Oberfläche auf, welche der Nut, bzw. dem Nutgrund, abgewandt ist, wobei die zweite Oberfläche mehr Wärmeenergie abgeben kann, als die erste Oberfläche, wobei die zweite Oberfläche zum Luftspalt der elektrischen Maschine gerichtet ist. So wird mehr Wärmeenergie zum Luftspalt geleitet. Durch den Luftspalt kann ein Kühlfluid wie Luft oder Wasser geführt sein. Die zweite Oberfläche weist beispielsweise eine größere Oberflächenrauigkeit auf als die erste Oberfläche. Damit kann die zweite Oberfläche größer ausgeführt werden als die erste Oberfläche. Die zweite Oberfläche kann beispielsweise auch eine Wellenform, Zackenform oder Kammform aufweisen, wobei sich durch diese Formen eine Oberflächenvergrößerung im Vergleich zu einer zweidimensionalen flachen Oberfläche ergibt.

In einer Ausgestaltung der elektrischen Maschine sind die Nutverschlusskeile, welche zum Fixieren der Wicklung in der

Nut dienen, mit innenliegenden Kanälen (≥ 1) ausgestaltet, damit sie mit einem Kühlmedium (Fluid) durchströmt werden können. Die gekühlten Keile stellen somit eine Wärmesenke dar, die sich in unmittelbarer Umgebung zur Wärmequelle (stromdurchflossene Leiter) befindet und somit die Spulen und die Zähne kühlen. Zudem wird das im Luftspalt strömende, insbesondere gasförmige Kühlmedium an der Außenseite des Keils ebenso gekühlt. Diese Oberfläche kann so gestaltet werden, dass die Wärmeübertragungsfläche maximal wird (z.B. durch hohe Oberflächenrauheit). Da sich der Querschnitt der gekühlten Nutverschlusskeile erhöhen wird, ist dieser vorteilhaft im Bereich des Streustegs ausgeprägt bzw. ausgeführt. Für Kühlkonzepte die einen Phasenwechsel nutzen, um die Kühlleistung zu erhöhen, kann mindestens ein Keil so gestaltet werden, dass er in definierten Abständen Öffnungen in Richtung des Luftspalts hat, durch die das Kühlmedium austreten kann. Optional können die Öffnungen eine Düsengeometrie aufweisen. Dadurch kann das Kühlmedium direkt auf den Läufer gesprüht werden, um diesen ebenfalls zu kühlen. Um die elektromagnetischen Eigenschaften der Maschine nicht zu beeinflussen, ist vorteilhaft auf die Materialwahl der Keile zu achten.

Gemäß eines Verfahrens zur Kühlung einer elektrischen Maschine, wobei die elektrische Maschine Nuten aufweist, wobei die Nuten mit Nutverschlüssen verschlossen sind, wobei zumindest ein Nutverschlusskeil einen Kanal aufweist, wird durch den Kanal ein Fluid zur Kühlung der elektrischen Maschine geführt. So ist das Kühlmedium (Fluid) nahe dem Bereich der elektrischen Maschine, der zur Erwärmung der elektrischen Maschine führt. Derart ist eine effiziente Kühlung der elektrischen Maschine möglich.

Gemäß einer Ausgestaltung des Verfahrens kann ein Nutverschluss gemäß einer der beschriebenen Ausführungsformen verwendet werden.

Gemäß einer Ausgestaltung des Verfahrens wird das Fluid in den Luftspalt der elektrischen Maschine geführt und insbesondere auf den Läufer der elektrischen Maschine gesprüht bzw. geleitet. So kann die Kühlwirkung noch weiter verstärkt werden. Das Sprühen bzw. Leiten des Fluids auf den Läufer wird beispielsweise durch Löcher, Schlitze und/oder Düsen im Kanal bzw. Nutverschluss ermöglicht.

In einer Ausgestaltung des Verfahrens wird zur Kühlung der elektrischen Maschine ein Phasenwechsel des Fluids verwendet. So kann beispielsweise ein flüssiges Fluid verdampft werden, um die Kühlwirkung zu verbessern. In einer weiteren Ausgestaltung des Verfahrens kann ein gasförmiges Fluids entspannt werden. Das Fluids weist also zunächst einen ersten Druck auf und nach der Entspannung einen zweiten Druck, wobei der erste Druck höher ist als der zweite Druck. Auch durch die Entspannung des gasförmigen Fluids kann eine Kühlwirkung erzielt werden.

In einer Ausgestaltung des Verfahrens wird dieses Verfahren simuliert. So kann beispielsweise die Kühlung einer elektrischen Maschine simuliert werden. Damit kann beispielsweise auch der Betrieb der elektrischen Maschine simuliert werden und insbesondere auch den Betriebszustände abhängig von der abverlangten Leistung.

In einer Ausgestaltung des Verfahrens betrifft das Verfahren also den simulierten Betrieb. Es wird beispielsweise der Betrieb der elektrischen Maschine in einer Windkraftanlage bzw. einer Maschineneinrichtung simuliert. Dadurch kann beispielsweise die Auslegung der Windkraftanlage bzw. der Maschineneinrichtung verbessert werden. Die Maschineneinrichtung ist beispielsweise eine Pumpeinrichtung, eine Kompressoreinrichtung (Kompressor), eine Elektrolokomotive oder dergleichen. Durch die Simulation ist auch die Ausbildung eines digitalen Zwillings möglich. So kann beispielsweise parallel zum Betrieb der elektrischen Maschine eine Überwachung erfolgen, um beispielsweise eine noch abrufbare Spitzenleistung für eine gewisse Zeit zu berechnen und/oder um einen sich anbahnenden Fehler zu erkennen.

Es ist ein Computerprogrammprodukt vorsehbar, das computerausführbare Programmmittel aufweist und bei Ausführung auf einer Rechnereinrichtung mit Prozessormitteln und Datenspeichermitteln geeignet ist, ein Verfahren nach einer der beschriebenen Arten durchzuführen. So kann eine zugrundeliegende Aufgabenstellung durch ein Computerprogrammprodukt gelöst werden, das zu einem Simulieren eines Betriebsverhaltens der elektrischen Maschine ausgebildet ist. Dazu kann das Computerprogrammprodukt Daten der elektrischen Maschine umfassen. Das Computerprogrammprodukt kann auch eine Datenschnittstelle aufweisen, über die Betriebsparameter, wie beispielsweise eine Drehzahl, ein Motorstrom und/oder eine Temperatur vorgebbar bzw. einspielbar sind. Ebenso kann das Computerprogrammprodukt auch eine Datenschnittstelle zum Ausgeben von Simulationsergebnissen aufweisen. Die elektrische Maschine, deren Betriebsverhalten mittels des Computerprogrammprodukts simulierbar ist, ist insbesondere gemäß mindestens einer der skizzierten Ausführungsformen ausgebildet. Das Computerprogrammprodukt kann dazu beispielsweise als sogenannter Digitaler Zwilling ausgebildet sein.

Ein Computerprogrammprodukt bzw. das Computerprogrammprodukt weist also computerausführbare Programmmittel auf und ist zur Ausführung auf einer Rechnereinrichtung mit Prozessormitteln und Datenspeichermitteln geeignet, um zumindest eines der beschriebenen Verfahren zumindest eine der beschriebenen elektrischen Maschinen zu simulieren.

Im Folgenden ist die Erfindung mit Hilfe von schematischen Ausführungsbeispielen weiter beschrieben. Gleichartige Elemente sind dabei mit den gleichen Bezugszeichen versehen.

Hierzu zeigt:
- FIG 1: einen Längsschnitt durch eine elektrische Maschine,
- FIG 2: einen Schnitt durch die elektrische Maschine von FIG 1 gemäß einer Linie II-II in FIG 1,
- FIG 3: einen weiteren Schnitt durch eine elektrische Maschine,
- FIG 4: eine Aufsicht auf einen Nutverschluss,
- FIG 5: eine weitere Aufsicht auf einen Nutverschluss,
- FIG 6: eine weitere Aufsicht auf einen Nutverschluss und
- FIG 7: einen Querschnitt eines Nutverschlusses.

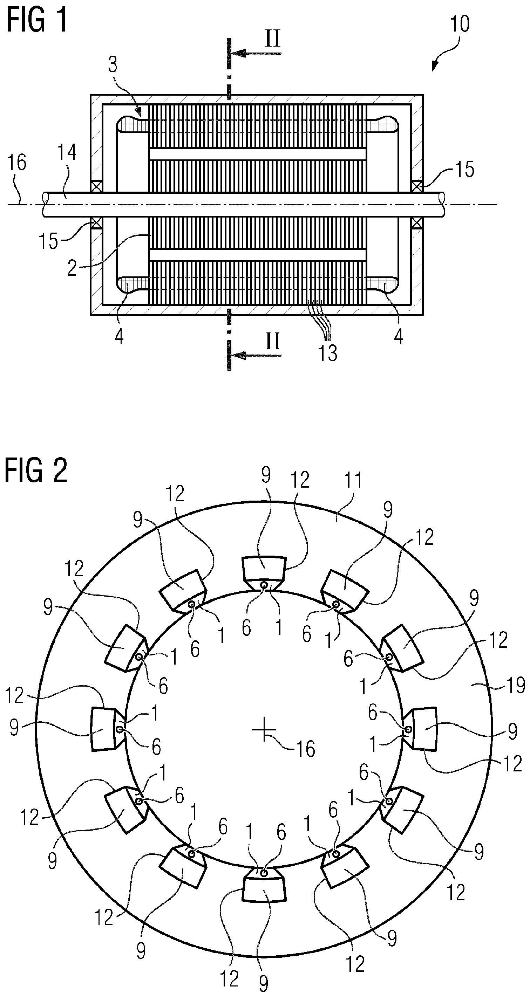

FIG 1 zeigt einen Längsschnitt durch eine elektrische Maschine 10. Gemäß FIG 1 weist die rotatorische elektrische Maschine 10 einen Rotor 2 (auch Läufer genannt) und ein Stator 3 mit einem Statorblechpaket und Wickelköpfen 4 auf. Der Rotor 2 ist auf einer Rotorwelle 14 angeordnet. Die Rotorwelle 14 ist in Lagern 15 gelagert, so dass die Rotorwelle 14 um eine Rotationsachse 16 rotierbar ist.

Soweit die Begriffe "axial", "radial" und "tangential verwendet werden, bedeutet "axial" eine Richtung parallel zur Rotationsachse 16. "Radial" ist eine Richtung orthogonal zur Axialrichtung direkt auf die Rotationsachse 6 zu bzw. von ihr weg. "Tangential" ist eine Richtung, die sowohl orthogonal zur Axialrichtung als auch orthogonal zur Radialrichtung gerichtet ist. Tangential ist also eine Richtung, die bei einer konstanten Axialposition und in einem konstanten radialen Abstand von der Rotationsachse 16 kreisförmig um die Rotationsachse 6 herum gerichtet ist.

Das Statorblechpaket weist Statorbleche 13 auf. Das Statorblechpaket weist Nuten 12 auf. Diese Nuten 12 sind Statornuten und verlaufen parallel zur Rotationsachse 16 der elektrischen Maschine 10. Sie sind kreisförmig um die Rotationsachse 16 herum verteilt angeordnet (siehe FIG 2).

FIG 2 zeigt einen Schnitt durch die elektrische Maschine von FIG 1 gemäß einer Linie II-II in FIG 1 mit einem Statorblechpaket 11. Die Statornuten 12 sind zur Rotationsachse 16 hin - also nach radial innen hin - zunächst offen. In den Statornuten 12 sind die Wicklungen 9 eines Statorwicklungssystems angeordnet. In den Statornuten 12 sind die Hauptabschnitte der Wicklungen 9 angeordnet. Wicklungsköpfe 4 der Wicklungen 9 ragen, wie allgemein üblich, gemäß FIG 1 an den beiden axialen Enden des Statorblechpakets über das Statorblechpaket 3 hinaus. Die Nuten 12 sind durch Nutverschlüsse 1 verschlossen, wobei die Nutverschlüsse 1 jeweils einen Kanal 6 aufweisen.

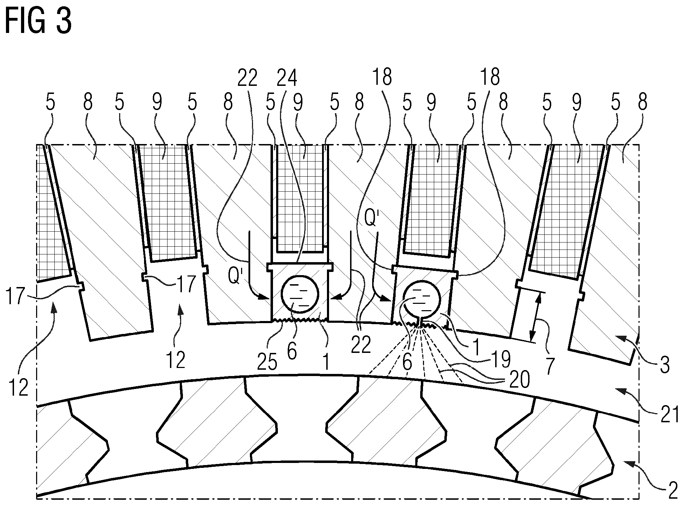

FIG 3 zeigt einen weiteren Schnitt durch eine elektrische Maschine mit einem Stator 2 und einem Rotor 3. Gezeigt sind Zähne 8 durch welche die Nuten 12 ausgebildet sind. Die Zähne 8 weisen einen Streusteg 7 auf. Die Wicklungen 9 sind in der Nut 12 von den Zähnen 8 durch eine Isolierung 5 isoliert. Die Zähne 8 weisen Rillen 17 auf. In diese Rillen 17 können Haltestege 18 der Nutverschlüsse 1,1' eingreifen. Beispielhaft sind in der Figur 3 zwei Nutverschlüsse 1 eingezeichnet. Die Nutverschlüsse 1 weisen neben Haltestegen 18 auch jeweils einen Kanal 6 auf. Der Kanal 6 des Nutverschlusses 1' weist eine Öffnung 19 auf. Aus dieser Eröffnung 19 kann Fluid 20 in den Luftspalt 21 austreten. Durch das Fluid 20 im Kanal 6 kann Wärmeenergie Q', welche durch einen Pfeil 22 als Wärmefluss symbolisiert ist aus den Zähnen bzw. dem Stator ausgeführt werden. Der Nutverschluss 1 weist eine erste Oberfläche 24 und eine zweite Oberfläche 25. Die erste Oberfläche 24 ist im Vergleich zur zweiten Oberfläche 25 glatter. Die zweite Oberfläche 25 ist also größer als die erste Oberfläche 24 und kann damit bezüglich der Oberflächenstruktur mehr Wärmeenergie abgeben.

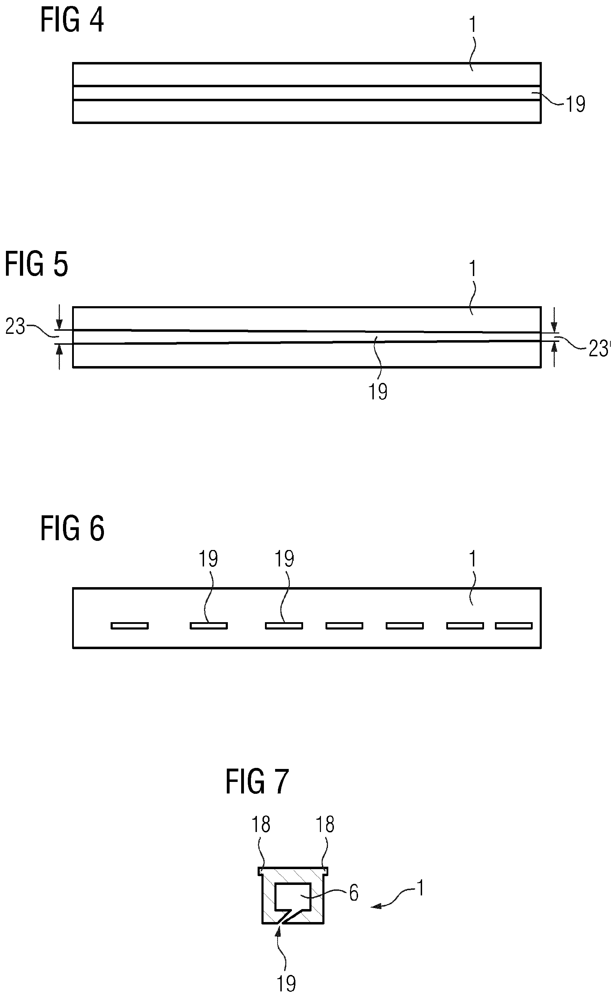

Die Darstellung nach FIG 4 zeigt eine Aufsicht auf einen Nutverschluss 1, welcher eine Öffnung 19 aufweist, welche sich über die Länge des Nutverschlusses 19 erstreckt und zentriert ist.

Die Darstellung nach FIG 5 zeigt eine weitere Aufsicht auf einen Nutverschluss 1, welcher eine Öffnung 19 aufweist, der Breite 23, 23' sich verändert. Dadurch kann die Austrittsmenge des Fluids über die Länge angepasst werden.

Die Darstellung nach FIG 6 zeigt eine weitere Aufsicht auf einen Nutverschluss 1, mit einer Vielzahl von Öffnungen 19, welche einen unterschiedlichen Abstand voneinander aufweisen. Auch dadurch kann die Austrittsmenge des Fluids über die Länge angepasst werden.

Die Darstellung nach FIG 7 zeigt einen Querschnitt eines Nutverschlusses 1. der Nutverschluss 1 weist Haltestege 18 und einen Kanal 6 auf. Der Kanal 6 weist eine Öffnung 19 auf welche als Düse ausgeführt ist. Die Öffnung 19 verjüngt sich zum Austritt hin und bildet so die Düse. Durch die Düse kann beispielsweise die Austrittrichtung des Fluids besser bestimmt werden.

## Patentansprüche

1. Elektrische Maschine (5) welche eine Nut (12) in einem Aktivteil (2,3) aufweist, wobei die Nut (12) mit einem Nutverschluss (1,1') verschlossen ist, wobei der Nutverschluss (1,1') einen Kanal (6) zur Führung eines Fluids (20) aufweist, wobei der Nutverschluss (1,1') eine erste Oberfläche (24) aufweist, welche der Nut (12) zugewandt ist und eine zweite Oberfläche (25) aufweist, welche der Nut (12) abgewandt ist, **dadurch gekennzeichnet dass** die zweite Oberfläche eine größere Oberflächenrauigkeit aufweist als die erste Oberfläche.

2. Elektrische Maschine (10) nach Anspruch 1, wobei der Nutverschluss (1,1') eine Öffnung (19) aufweist, wobei die Öffnung (19) den Kanal (6) zu einem Luftspalt (21) hin öffnet.

3. Elektrische Maschine (10) nach Anspruch 1 oder 2, wobei die Öffnung (19) eine Düse ist.

4. Elektrische Maschine (10) nach einem der Ansprüche 1 bis 3, wobei der Kanal (6) in der gleichen radialen Position ist wie ein Streusteg (7).

5. Elektrische Maschine (10) nach einem der Ansprüche 1 bis 4, wobei der Nutverschluss (1,1') eine erste Oberfläche (24) aufweist, welche der Nut (12) zugewandt ist und eine zweite Oberfläche (25) aufweist, welche der Nut (12) abgewandt ist, wobei die zweite Oberfläche (25) mehr Wärmeenergie abgeben kann als die erste Oberfläche (24), wobei die zweite Oberfläche (25) zum Luftspalt (21) der elektrischen Maschine (10) gerichtet ist.

6. Verfahren zur Kühlung einer elektrischen Maschine (10) nach einem der Ansprüche 1 bis 5, wobei durch den Kanal (6) ein Fluid (20) zur Kühlung der elektrischen Maschine (10) geführt wird.

7. Verfahren nach Anspruch 6, wobei das Fluid (20) in den Luftspalt (21) der elektrischen Maschine (10) geführt wird und insbesondere auf den Läufer (2) gesprüht wird.

8. Verfahren nach Anspruch 6 oder 7, wobei zur Kühlung der elektrischen Maschine (10) ein Phasenwechsel des Fluids (20) verwendet wird.

9. Verfahren nach einem der Ansprüche 6 bis 8, wobei das Verfahren simuliert wird.

10. Computerprogrammprodukt, das computerausführbare Programmmittel aufweist und bei Ausführung auf einer Rechnereinrichtung mit Prozessormitteln und Datenspeichermitteln geeignet ist, ein Verfahren nach einem der Ansprüche 6 bis 9 durchzuführen und/oder eine elektrische Maschine (10) nach einem der Ansprüche 1 bis 5 zu simulieren.

## Claims

1. Electric machine (5) which has a slot (12) in an active part (2, 3), wherein the slot (12) is closed by a slot closure (1, 1'), wherein the slot closure (1, 1') has a channel (6) for guiding a fluid (20), wherein the slot closure (1, 1') has a first surface (24), which faces the slot (12), and a second surface (25), which faces away from the slot (12), **characterized in that** the second surface has a greater surface roughness than the first surface.

2. Electric machine (10) according to Claim 1, wherein the slot closure (1, 1') has an opening (19), wherein the opening (19) opens the channel (6) towards an air gap (21) .

3. Electric machine (10) according to Claim 1 or 2, wherein the opening (19) is a nozzle.

4. Electric machine (10) according to any of Claims 1 to 3, wherein the channel (6) is in the same radial position as a scattering web (7).

5. Electric machine (10) according to any of Claims 1 to 4, wherein the slot closure (1, 1') has a first surface (24), which faces the slot (12), and a second surface (25), which faces away from the slot (12), wherein the second surface (25) can give off more thermal energy than the first surface (24), wherein the second surface (25) is directed towards the air gap (21) of the electric machine (10).

6. Method for cooling an electric machine (10) according to any of Claims 1 to 5, wherein a fluid (20) for cooling the electric machine (10) is guided through the channel (6).

7. Method according to Claim 6, wherein the fluid (20) is guided into the air gap (21) of the electric machine (10) and in particular is sprayed onto the rotor (2).

8. Method according to Claim 6 or 7, wherein a phase change of the fluid (20) is used for cooling the electric machine (10).

9. Method according to any of Claims 6 to 8, wherein the method is simulated.

10. Computer program product which has computer-executable program means and, when executed on a computer device having processor means and data storage means, is suitable for carrying out a method according to any of Claims 6 to 9 and/or simulating an electric machine (10) according to any of Claims 1 to 5.

## Revendications

1. Machine électrique (5), laquelle possède une rainure (12) dans une partie active (2, 3), la rainure (12) étant fermée par une fermeture de rainure (1, 1'), la fermeture de rainure (1, 1') possédant un canal (6) pour guider un fluide (20), la fermeture de rainure (1, 1') possédant une première surface (24), laquelle fait face à la rainure (12), et possédant une deuxième surface (25), laquelle est opposée à la rainure (12), **caractérisée en ce que** la deuxième surface présente une rugosité de surface supérieure à celle de la première surface.

2. Machine électrique (10) selon la revendication 1, la fermeture de rainure (1, 1') possédant une ouverture (19), l'ouverture (19) ouvrant le canal (6) vers un entrefer (21).

3. Machine électrique (10) selon la revendication 1 ou 2, l'ouverture (19) étant une buse.

4. Machine électrique (10) selon l'une des revendications 1 à 3, le canal (6) se trouvant dans la même position radiale qu'une nervure de dispersion (7).

5. Machine électrique (10) selon l'une des revendications 1 à 4, la fermeture de rainure (1, 1') possédant une première surface (24), laquelle fait face à la rainure (12), et une deuxième surface (25), laquelle est à l'opposé à la rainure (12), la deuxième surface (25) pouvant dégager plus d'énergie thermique que la première surface (24), la deuxième surface (25) étant dirigée vers l'entrefer (21) de la machine électrique (10).

6. Procédé pour refroidir une machine électrique (10) selon l'une des revendications 1 à 5, un fluide (20) destiné à refroidir la machine électrique (10) étant guidé à travers le canal (6).

7. Procédé selon la revendication 6, **caractérisé en ce que** le fluide (20) est guidé dans l'entrefer (21) de la machine électrique (10) et est en particulier pulvérisé sur le rotor (2).

8. Procédé selon la revendication 6 ou 7, un changement de phase du fluide (20) étant utilisé pour refroidir la machine électrique (10).

9. Procédé selon l'une des revendications 6 à 8, le procédé étant simulé.

10. Produit de programme informatique qui possède des moyens de programme exécutables par ordinateur et qui, lorsqu'il est exécuté sur un dispositif informatique doté de moyens de processeur et de moyens de stockage de données, est adapté pour mettre en œuvre un procédé selon l'une des revendications 6 à 9 et/ou pour simuler une machine électrique (10) selon l'une des revendications 1 à 5.
